# EUROPEAN PATENT APPLICATION

(11) **EP 4 588 896 A1**
(43) Date of publication of application: **23.07.2025**
(21) Application number: 23907484.2
(22) Date of filing: 29.11.2023
(51) Int. Cl.: C01G 53/04, C01G 53/00, H01M 4/505, H01M 4/525, H01M 4/02

(54) **METHOD FOR PREPARING POSITIVE ELECTRODE ACTIVE MATERIAL PRECURSOR, POSITIVE ELECTRODE ACTIVE MATERIAL PRECURSOR, AND METHOD FOR PREPARING POSITIVE ELECTRODE ACTIVE MATERIAL USING POSITIVE ELECTRODE ACTIVE MATERIAL PRECURSOR**

(30) Priority: 20.12.2022 KR 20220179591
(71) Applicant: LG CHEM, LTD., Seoul 07336 (KR)
(72) Inventor: YOON, Ju Han, Daejeon 34122 (KR); KIM, Kyu Ri, Daejeon 34122 (KR); KIM, Min Seong, Daejeon 34122 (KR); KIM, Won Tae, Daejeon 34122 (KR); YANG, Jeong Jin, Daejeon 34122 (KR); JEONG, Myeong Sang, Daejeon 34122 (KR); KIM, Jeong Hun, Daejeon 34122 (KR)
(74) Representative: Hoffmann Eitle
(86) International application number: PCT/KR2023/019468
(87) International publication number: WO 2024/136198

(57) **Abstract**

The present invention relates to a method of preparing a cobalt-free manganese-rich positive electrode active material precursor with reduced or no surface impurities, a positive electrode active material precursor which is prepared thereby to be free of impurities, such as manganese oxide, on its surface, and a method of preparing a positive electrode active material using the positive electrode active material precursor.

## Description

### TECHNICAL FIELD

### [Cross-reference to Related Applications]

This application claims priority from Korean Patent Application No. 10-2022-0179591, filed on December 20, 2022, the disclosure of which is incorporated by reference herein.

### [Technical Field]

The present invention relates to a method of preparing a cobalt-free manganese-rich positive electrode active material precursor with reduced or no surface impurities, a positive electrode active material precursor which is prepared thereby to be free of impurities, such as manganese oxide, on its surface, and a method of preparing a positive electrode active material using the positive electrode active material precursor.

### BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal composite oxides have been used as a positive electrode active material of the lithium secondary battery, and, among these oxides, a lithium cobalt composite metal oxide, such as LiCoO₂, having a high operating voltage and excellent capacity characteristics has been mainly used. However, since the LiCoO₂ has very poor thermal properties due to an unstable crystal structure caused by delithiation and is also expensive, there is a limitation in using a large amount of the LiCoO₂ as a power source for applications such as electric vehicles.

Lithium manganese composite metal oxides (LiMnO₂ or LiMn₂O₄), lithium iron phosphate compounds (LiFePO₄, etc.), or lithium nickel composite metal oxides (LiNiO₂, etc.) have been developed as materials for replacing the LiCoO₂. Among these materials, research and development of the lithium nickel composite metal oxides, in which a large capacity battery may be easily achieved due to a high reversible capacity of about 250 mAh/g, have been actively conducted. However, the LiNiO₂ has limitations in that the LiNiO₂ has poorer thermal stability than the LiCoO₂ and, when an internal short circuit occurs in a charged state due to an external pressure, the positive electrode active material itself is decomposed to cause rupture and ignition of the battery.

Accordingly, as a method to improve low thermal stability while maintaining the excellent reversible capacity of the LiNiO₂, a nickel cobalt manganese-based lithium composite metal oxide (hereinafter, simply referred to as 'NCM-based lithium oxide'), in which a portion of nickel (Ni) is substituted with manganese (Mn), cobalt (Co), or aluminum (Al), has been developed.

However, due to a recent increase in the price of cobalt (Co), a lithium-rich NCM-based positive electrode active material, which may meet high capacity while including a relatively low cobalt (Co) content or not including cobalt, has been developed.

With respect to a cobalt-free, lithium (Li) and Mn-rich positive electrode active material, more Li is required than a typical NCM-based positive electrode active material, and thus, since a positive electrode active material precursor with a high specific surface area, which may be in contact with Li, is required, it is synthesized by a co-precipitation method in which a complexing agent is not used. However, in a case in which the precursor is prepared without using the complexing agent, an unreacted material remains in a solution even after a desired particle size is reached to complete a reaction and reacts with oxygen in the air to form an oxide which remains on a surface of the precursor, and, as a result, there is a problem in that the oxide also remains as an impurity on a surface of a positive electrode active material, which is prepared by using the precursor, to cause a decrease in capacity.

Thus, there is a need to develop a positive electrode active material precursor with reduced or no surface impurities.

### [Prior Art Documents]

### [Patent Document]

(Patent Document 1) CN 109970106 A (2019. 07. 05.)

### DISCLOSURE OF THE INVENTION

### TECHNICAL PROBLEM

An aspect of the present invention provides a method of preparing a cobalt-free positive electrode active material precursor in which formation of a manganese oxide impurity is suppressed by including a step of additionally adding a specific amount of an ammonium cationic complexing agent and aging after a co-precipitation reaction.

Also, another aspect of the present invention provides a cobalt-free, manganese-rich positive electrode active material precursor which has a high specific surface area and simultaneously has no or a very small amount of manganese oxide, as an impurity, by being prepared by the above preparation method.

In addition, another aspect of the present invention provides a method of preparing a positive electrode active material using the above positive electrode active material precursor.

### TECHNICAL SOLUTION

In order to solve the above-described tasks, the present invention provides a method of preparing a positive electrode active material precursor, a positive electrode active material precursor, and a method of preparing a positive electrode active material.
(1) The present invention provides a method of preparing a positive electrode active material precursor which includes steps of: performing a co-precipitation reaction on a transition metal solution containing nickel (Ni) and manganese (Mn) in the presence of a basic solution and an ammonium cationic complexing agent in a nitrogen atmosphere (S1); and additionally adding an ammonium cationic complexing agent and aging while maintaining the nitrogen atmosphere, after completion of the co-precipitation reaction (S2), wherein the ammonium cationic complexing agent in step (S2) is added such that a weight ratio of the ammonium cationic complexing agent in step (S1) to the ammonium cationic complexing agent in step (S2) is in a range of 1:0.5 to 1:3.5.
(2) The present invention provides the method of (1) above, wherein the co-precipitation reaction of step (S1) is performed by steps of: adding a basic solution and an ammonium cationic complexing agent to a reactor with a nitrogen atmosphere and mixing to create an atmosphere with a pH of 12.0 or less (S1-1); and adding a transition metal solution containing Ni and Mn and a basic solution to the reactor and performing a co-precipitation reaction at a pH of 11.0 or less (S1-2).
(3) The present invention provides the method of (2) above, wherein the pH in step (S1-1) is in a range of 11.5 to 12.0, and the pH in step (S1-2) is in a range of 10.5 to 11.0.
(4) The present invention provides the method of any one of (1) to (3) above, wherein the ammonium cationic complexing agent of step (S1) is used in an amount of 0.006 mole to 0.012 mole based on 1 mole of transition metal in the transition metal solution.
(5) The present invention provides the method of any one of (1) to (4) above, wherein the transition metal solution further includes at least one selected from zirconium (Zr), aluminum (Al), copper (Cu), rhenium (Re), vanadium (V), chromium (Cr), iron (Fe), gallium (Ga), silicon (Si), boron (B), ruthenium (Ru), titanium (Ti), niobium (Nb), molybdenum (Mo), magnesium (Mg), and platinum (Pt).
(6) The present invention provides the method of any one of (1) to (5) above, wherein the transition metal solution includes Mn in an amount of 60 mol% or more.
(7) The present invention provides a positive electrode active material precursor including a transition metal hydroxide represented by Formula 1; and optionally a manganese oxide (Mn₃O₄), and having a specific surface area of 30 m²/g to 45 m²/g, wherein, in a case in which the positive electrode active material precursor includes the manganese oxide, an amount of the manganese oxide is 0.3 wt% or less:

   [Formula 1] [NiₐMn_{b}M_{c}](OH)₂

   wherein, in Formula 1,
   M is one selected from Zr, Al, Cu, Re, V, Cr, Fe, Ga, Si, B, Ru, Ti, Nb, Mo, Mg, and Pt, and
   0.1≤a≤0.4, 0.5<b≤0.80, 0≤c≤0.1, and a+b+c=1.
(8) The present invention provides a method of preparing a positive electrode active material which includes steps of: mixing the positive electrode active material precursor of (7) and a lithium raw material; and sintering the mixture.
(9) The present invention provides the method of (8) above, wherein the positive electrode active material precursor and the lithium raw material are mixed such that a molar ratio of the positive electrode active material precursor to a lithium element in the lithium raw material is in a range of 1:1.2 to 1:1.6.

### ADVANTAGEOUS EFFECTS

Since a method of preparing a cobalt-free positive electrode active material precursor according to the present invention has an effect of preparing a positive electrode active material precursor without surface impurities by suppressing formation of manganese oxide by including a step of additionally adding an ammonium cationic complexing agent at a specific ratio and aging after a co-precipitation reaction.

Also, a positive electrode active material precursor according to the present invention has an effect of excellent initial capacity and capacity retention by having a large specific surface area and including no or a very small amount of manganese oxide.

### BRIEF DESCRIPTION OF THE DRAWINGS

The following drawings attached to the specification illustrate specific examples of the present invention by example, and serve to enable technical concepts of the present invention to be further understood together with detailed description of the invention given below, and therefore the present invention should not be interpreted only with matters in such drawings.
FIG. 1 is a scanning electron microscope (SEM) image (magnification 10K) of a positive electrode active material precursor prepared in Example 1.
FIG. 2 is an SEM image (magnification 10K) of a positive electrode active material precursor prepared in Example 2.
FIG. 3 is an SEM image (magnification 10K) of a positive electrode active material precursor prepared in Example 3.
FIG. 4 is an SEM image (magnification 10K) of a positive electrode active material precursor prepared in Comparative Example 1.
FIG. 5 is an SEM image (magnification 10K) of a positive electrode active material precursor prepared in Comparative Example 2.
FIG. 6 is an SEM image (magnification 10K) of a positive electrode active material precursor prepared in Comparative Example 3.
FIG. 7 is an SEM image (magnification 10K) of a positive electrode active material prepared by using the positive electrode active material precursor of Example 1.
FIG. 8 is an SEM image (magnification 10K) of a positive electrode active material prepared by using the positive electrode active material precursor of Example 2.
FIG. 9 is an SEM image (magnification 10K) of a positive electrode active material prepared by using the positive electrode active material precursor of Example 3.
FIG. 10 is an SEM image (magnification 10K) of a positive electrode active material prepared by using the positive electrode active material precursor of Comparative Example 1.
FIG. 11 is an SEM image (magnification 10K) of a positive electrode active material prepared by using the positive electrode active material precursor of Comparative Example 2.
FIG. 12 is an SEM image (magnification 10K) of a positive electrode active material prepared by using the positive electrode active material precursor of Comparative Example 3.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The present invention provides a method of preparing a cobalt-free manganese-rich positive electrode active material precursor without surface impurities, a positive electrode active material precursor, and a method of preparing a positive electrode active material by using the positive electrode active material precursor.

Hereinafter, the present invention will be described in more detail.

### Method of Preparing Positive Electrode Active Material Precursor

The present invention provides a method of preparing a cobalt-free, manganese-rich positive electrode active material precursor.

The method of preparing a positive electrode active material precursor according to an embodiment of the present invention includes the steps of: performing a co-precipitation reaction on a transition metal solution containing nickel (Ni) and manganese (Mn) in the presence of a basic solution and an ammonium cationic complexing agent in a nitrogen atmosphere (S1); and additionally adding an ammonium cationic complexing agent and aging while maintaining the nitrogen atmosphere, after completion of the co-precipitation reaction (S2), wherein the ammonium cationic complexing agent in step (S2) may be added such that a weight ratio of the ammonium cationic complexing agent in step (S1) to the ammonium cationic complexing agent in step (S2) is in a range of 1:0.5 to 1:3.5.

With respect to a cobalt-free, lithium (Li) and manganese (Mn)-rich positive electrode active material, more Li is required than a typical NCM-based positive electrode active material, and thus, since a positive electrode active material precursor with a high specific surface area, which may be in contact with the Li, is required, it is synthesized by a co-precipitation method in which a complexing agent is not used, wherein, in this case, since an unreacted material remains in a solution even after a reaction is completed and reacts with oxygen in the air to form an oxide which remains on a surface of the precursor, there is a problem in that the oxide also remains as an impurity on a surface of a positive electrode active material, which is prepared by using the precursor, to cause a decrease in capacity.

However, since the method of preparing a positive electrode active material precursor according to the present invention performs a co-precipitation reaction on the unreacted material by performing the step of additionally adding the ammonium cationic complexing agent such that a weight ratio of the ammonium cationic complexing agent used before the co-precipitation reaction to the ammonium cationic complexing agent is in a range of 1:0.5 to 1:3.5 and aging while maintaining the nitrogen atmosphere, as an inert atmosphere, after the co-precipitation reaction, the method may prepare a positive electrode active material precursor without impurities remaining on a surface thereof by suppressing formation of an oxide impurity such as manganese oxide.

Specifically, the method of preparing a positive electrode active material precursor according to the present invention will be described step by step.

### Step (S1)

Step (S1) is a step of performing a co-precipitation reaction on transition metal, wherein it may be performed by performing a co-precipitation reaction on a transition metal solution containing Ni and Mn in the presence of a basic solution and an ammonium cationic complexing agent in a nitrogen atmosphere.

As another example, the co-precipitation reaction may be performed by the steps of adding a basic solution and an ammonium cationic complexing agent to a reactor with a nitrogen atmosphere and mixing to create an atmosphere with a pH of 12.0 or less (S1-1); and adding a transition metal solution containing Ni and Mn and a basic solution to the reactor and performing a co-precipitation reaction at a pH of 11.0 or less (S1-2).

Specifically, the pH in step (S1-1) may be in a range of 11.5 to 12.0, and the pH in step (S1-2) may be in a range of 10.5 to 11.0.

The transition metal solution may be prepared by adding transition metal raw materials to a solvent, specifically, deionized water, or a mixed solvent of deionized water and an organic solvent (e.g., alcohol etc.) which may be uniformly mixed with the deionized water and mixing them, or may be prepared by mixing aqueous solutions of the transition metal raw materials.

The transition metal raw materials may be sulfates, acetic acid salts, nitrates, halides, sulfides, hydroxides, oxides, or oxyhydroxides of transition metals.

As a specific example, the Ni raw material may be nickel-containing acetic acid salts, nitrates, sulfates, halides, sulfides, hydroxides, oxides, or oxyhydroxides, and, as a more specific example, the Ni raw material may be Ni(OH)₂, NiO, NiOOH, NiCO₃·2Ni(OH)₂·4H₂O, NiC₂O₂·2H₂O, Ni(NO₃)₂·6H₂O, NiSO₄·6H₂O, a fatty acid nickel salt, a nickel halide, or a combination thereof, but is not limited thereto.

Also, the Mn raw material, for example, may be manganese-containing acetic acid salts, nitrates, sulfates, halides, sulfides, hydroxides, oxides, or oxyhydroxides, and, as a more specific example, the Mn raw material may be manganese oxides such as Mn₂O₃, MnO₂, and Mn₃O₄; manganese salts such as MnCO₃, Mn(NO₃)₂, MnSO₄, manganese acetate, manganese dicarboxylate, manganese citrate, and a fatty acid manganese salt; a manganese oxyhydroxide, manganese chloride, or a combination thereof, but is not limited thereto.

As another example, the transition metal solution may further include at least one selected from zirconium (Zr), aluminum (Al), copper (Cu), rhenium (Re), vanadium (V), chromium (Cr), iron (Fe), gallium (Ga), silicon (Si), boron (B), ruthenium (Ru), titanium (Ti), niobium (Nb), molybdenum (Mo), magnesium (Mg), and platinum (Pt), and, in this case, the transition metal solution may further include a raw material containing Zr, Al, Cu, Re, V, Cr, Fe, Ga, Si, B, Ru, Ti, Nb, Mo, Mg or Pt, and the raw material may be an acetic acid salt, nitrate, sulfate, halide, sulfide, hydroxide, oxide, or oxyhydroxide containing each of the above metals.

Also, the transition metal solution may contain Mn among the transition metals in the solution in an amount of greater than 50 mol%, specifically, 60 mol% or more.

As another example, the transition metal solution does not contain cobalt (Co).

Furthermore, the basic solution, as a precipitant, may be a hydroxide of alkali metal or alkaline earth metal, such as NaOH, KOH, or Ca(OH)₂, a hydrate thereof, or a combination thereof.

As another example, the basic solution may be used in the form of an aqueous solution, and, in this case, deionized water or a mixture of deionized water and an organic solvent (e.g., alcohol etc.), which may be uniformly mixed with the deionized water, may be used as a solvent.

Also, the basic solution may play a role in adjusting the pH in the reactor during the co-precipitation reaction, and the pH in the reactor may be controlled to desired conditions by adjusting an amount of the basic solution added.

Furthermore, the ammonium cationic complexing agent may include at least one selected from the group consisting of NH₄OH, (NH₄)₂SO₄, NH₄NO₃, NH₄Cl, CH₃COONH₄, and (NH₄)₂CO₃, the ammonium cationic complexing agent may be used in the form of an aqueous solution, and, in this case, the ammonium cationic complexing agent may be prepared by mixing with deionized water or a mixed solvent of deionized water and an organic solvent (e.g., alcohol etc.) which may be uniformly mixed with the deionized water.

Also, the ammonium cationic complexing agent in step (S1) may be used in an amount of 0.006 mole to 0.012 mole, specifically, 0.007 mole to 0.011 mole based on 1 mole of transition metal in the transition metal solution, and, in this case, an initial particle nucleus may be formed smoothly and may be grown to meet a desired particle size distribution.

The co-precipitation reaction may be performed while stirring at a temperature of 40°C to 70°C, and stirring speed is not particularly limited, but the stirring may be performed at 100 rpm to 2,000 rpm in terms of facilitating an increase in reaction rate.

### Step (S2)

Step (S2) is a step for preparing a positive electrode active material precursor without surface impurities by suppressing and removing formation of oxide by allowing an unreacted material to participate in a co-precipitation reaction, wherein it is performed by additionally adding an ammonium cationic complexing agent and aging while maintaining the nitrogen atmosphere, after completion of the co-precipitation reaction.

The aging may be performed while maintaining the nitrogen atmosphere. When left standing in an air atmosphere, the unreacted transition metal reacts with oxygen to form impurities on the surface of the precursor, wherein, in the present invention, since the aging is performed in the nitrogen atmosphere, that is, an inert atmosphere, the ammonium cationic complexing agent is additionally added to facilitate a reaction of the unreacted transition metal in the reactor with OH-, and thus, impurities may not be formed in the finally-prepared positive electrode active material precursor.

Also, the ammonium cationic complexing agent additionally added in step (S2) may be added such that a weight ratio of the ammonium cationic complexing agent in step (S1) to the ammonium cationic complexing agent additionally added in step (S2) is in a range of 1:0.5 to 1:3.5, specifically, 1:0.5 to 1:3, and, in this case, since all unreacted transition metals in the reactor react, surface impurities may not be formed even when the finally-prepared positive electrode active material precursor is exposed to the air.

The ammonium cationic complexing agent in step (S2) may be the same as the ammonium cationic complexing agent used in step (S1), or may be at least one selected from the ammonium cationic complexing agents described above.

Also, the method of preparing a positive electrode active material precursor according to the embodiment of the present invention may further perform at least one process selected from washing and drying after step (S2), and, in this case, the washing and the drying may be performed by conventional means known in the art.

As an example, the washing may be performed by a method of adding the precursor to ultrapure water and stirring, washing temperature may be in a range of 70°C or lower, specifically, 40°C to 70°C, and washing time may be in a range of 10 minutes to 1 hour.

Also, the drying is not particularly limited as long as it is a method capable of drying without causing chemical changes in the prepared precursor, but, for example, a drying method using a spray dryer and a rotary evaporator, a vacuum drying method, or a natural drying method may be used.

### Positive Electrode Active Material Precursor

The present invention provides a positive electrode active material precursor without surface impurities which is prepared by the above preparation method.

The positive electrode active material precursor according to an embodiment of the present invention is characterized in that it includes a transition metal hydroxide represented by Formula 1 below; and optionally a manganese oxide (Mn₃O₄), and has a specific surface area of 30 m²/g to 45 m²/g, wherein, in a case in which the positive electrode active material precursor includes the manganese oxide, an amount of the manganese oxide is 0.3 wt% or less.

Herein, the amount of the manganese oxide is measured from an intensity of a manganese oxide crystal structure peak in an X-ray diffraction (XRD) spectrum which is obtained by XRD measurement using non-monochromated CuKα radiation.

[Formula 1] [NiₐMn_{b}M_{c}](OH)₂

In Formula 1,
M is one selected from Zr, Al, Cu, Re, V, Cr, Fe, Ga, Si, B, Ru, Ti, Nb, Mo, Mg, and Pt, and
0.1≤a≤0.4, 0.5<b≤0.80, 0≤c≤0.1, and a+b+c=1.

Also, the positive electrode active material precursor may be formed of polycrystal grains that are composed of secondary particles in which primary particles are aggregated. The primary particle of the present invention may be formed and grown by the above-described preparation method to have a fine flaky structure, and the positive electrode active material precursor of the present invention, which is formed of the polycrystal grains that are composed of the secondary particles which are formed by the aggregation of the primary particles, may have high specific surface area characteristics.

Herein, the 'polycrystal grain' refers to a grain in a form in which crystal lattice structures are arranged in irregular orientations throughout the grain, wherein it may be composed of secondary particles in which primary particles are aggregated. Herein, the secondary particle typically has a particle structure in contrast to the primary particle, wherein it is a structure in which small-sized primary particles are physically and/or chemically aggregated to form a relatively large particle.

### Positive Electrode Active Material and Method of Preparing Positive Electrode Active Material

The present invention provides a positive electrode active material prepared by using the above positive electrode active material precursor and a method of preparing a positive electrode active material.

Since the positive electrode active material according to an embodiment of the present invention is prepared by using the above-described positive electrode active material precursor, it has an effect of less surface impurities and excellent capacity retention.

Also, the method of preparing a positive electrode active material includes the steps of mixing the positive electrode active material precursor and a lithium raw material; and sintering the mixture.

Specifically, the method of preparing a positive electrode active material according to the present invention may be performed by a method of preparing a positive electrode active material which is known in the art except that the positive electrode active material precursor according to the present invention is used, and the method is not particularly limited.

The lithium raw material may include lithium-containing carbonates (e.g., lithium carbonate, etc.), hydrates (e.g., lithium hydroxide hydrate (LiOH·H₂O), etc.), hydroxides (e.g., lithium hydroxide, etc.), nitrates (e.g., lithium nitrate (LiNO₃), etc.), and chlorides (e.g., lithium chloride (LiCl), etc.), and any one thereof or a mixture of two or more thereof may be used.

The mixing of the positive electrode active material precursor and the lithium raw material may be performed by solid-phase mixing such as jet milling, and a mixing ratio of the positive electrode active material precursor to the lithium raw material may be determined in a range that satisfies a mole fraction of each component in the finally prepared positive electrode active material. More specifically, the positive electrode active material precursor and the lithium raw material may be mixed such that a molar ratio of the positive electrode active material precursor to a lithium element in the lithium raw material is in a range of 1:1.2 to 1:1.6.

Also, although not essential, raw materials for doping a portion of transition metals and/or oxygen of the positive electrode active material may be additionally included in addition to the positive electrode active material precursor and the lithium raw material during the mixing. For example, the above-described M¹-containing raw material and/or M²-containing raw material or an X-containing raw material to be described later may be additionally mixed during the mixing. In this case, the X-containing raw material, for example, may be Na₃PO₄, K₃PO₄, Mg₃(PO₄)₂, AlF₃, NH₄F, or LiF, but is not limited thereto. In a case in which the portion of the oxygen is replaced by the X element as described above, an effect of suppressing oxygen desorption and a reaction with an electrolyte solution during charge and discharge of a secondary battery may be obtained.

The sintering may be performed at 800°C to 1,000°C, specifically, at 850°C to 950°C, and sintering time may be in a range of 5 hours to 30 hours, specifically, 8 hours to 15 hours, but the present invention is not limited thereto.

### Positive Electrode and Secondary Battery

The present invention provides a positive electrode including the above positive electrode active material and a lithium secondary battery including the positive electrode.

The positive electrode according to an embodiment of the present invention includes a positive electrode collector and a positive electrode active material layer formed on the positive electrode collector, and, in this case, the positive electrode active material layer includes the above-described positive electrode active material.

The positive electrode may be prepared according to a typical method of preparing a positive electrode except that the above-described positive electrode active material is used. For example, the positive electrode may be prepared by a method of preparing a positive electrode material mixture by dissolving or dispersing components constituting the positive electrode active material layer, that is, the positive electrode active material as well as a conductive agent and/or a binder in a solvent, applying the positive electrode material mixture to at least one surface of the positive electrode collector, and then drying and rolling the positive electrode collector, or the positive electrode may be prepared by casting the positive electrode material mixture on a separate support and then laminating a film separated from the support on the positive electrode collector.

In this case, the positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer, which includes the positive electrode active material according to the present invention and optionally further includes at least one of the conductive agent and the binder, if necessary, is disposed on at least one surface of the current collector.

The positive electrode active material may be included in an amount of 80 wt% to 99 wt%, more specifically, 85 wt% to 98 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 1 wt% to 30 wt% based on the total weight of the positive electrode active material layer.

Also, the binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The solvent used in the preparation of the positive electrode material mixture may be a solvent normally used in the art, and, for example, dimethyl sulfoxide (DMSO), isopropyl alcohol, N-methylpyrrolidone (NMP), acetone, or water may be used alone or in a mixture thereof. An amount of the solvent used may be appropriately adjusted in consideration of a coating thickness of a slurry, manufacturing yield, or viscosity.

Also, the lithium secondary battery according to the present invention includes a positive electrode, a negative electrode disposed to face the positive electrode, a separator disposed between the positive electrode and the negative electrode, and an electrolyte, and, in this case, the positive electrode is the above-described positive electrode according to the present invention.

The lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on at least one surface of the negative electrode collector.

The negative electrode may be prepared according to a typical method of preparing a negative electrode which is generally known in the art. For example, the negative electrode may be prepared by a method of preparing a negative electrode material mixture by dissolving or dispersing components constituting the negative electrode active material layer, that is, a negative electrode active material as well as a conductive agent and/or a binder in a solvent, applying the negative electrode material mixture to at least one surface of the negative electrode collector, and then drying and rolling the negative electrode collector, or the negative electrode may be prepared by casting the negative electrode material mixture on a separate support and then laminating a film separated from the support on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiOᵥ(0<v<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

Also, the binder and the conductive agent may be the same as those previously described in the positive electrode.

In the secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as Ra-CN (where Ra is a linear, branched, or cyclic hydrocarbon group having 2 to 20 carbon atoms and may include a double-bond, aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate; pyridine, triethylphosphite, triethanolamine, cyclic ether, ethylenediamine, n-glyme, hexamethylphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 wt% to 5 wt% based on a total weight of the electrolyte.

As described above, since the secondary battery including the positive electrode active material according to the present invention has excellent capacity characteristics and high-temperature stability, the lithium secondary battery is suitable for portable devices, such as mobile phones, notebook computers, and digital cameras, and electric cars such as hybrid electric vehicles (HEVs).

Also, the secondary battery according to the present invention may be used as a unit cell of a battery module, and the battery module may be used in a battery pack. The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

### Examples

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example 1

NiSO₄ and MnSO₄ were mixed in deionized water in amounts such that a molar ratio of Ni:Mn was 35:65 to prepare a transition metal aqueous solution with a concentration of 2.4 M.

2.6 L of deionized water was added into a 10 L continuous stirred tank reactor, and the reactor was purged with nitrogen gas at 2 L/min to remove dissolved oxygen in the water and create a non-oxidizing atmosphere in the reactor. Thereafter, while continuously flowing the nitrogen gas at 2 L/min, 3.87 ml of an aqueous NaOH solution with a concentration of 25 wt% and 88.8 ml of an aqueous NH₄OH solution with a concentration of 9 wt% were added and stirred at a speed of 150 rpm at 50°C to adjust a pH in the reactor to be about 12.0.

Thereafter, while stirring at 1,000 rpm, the transition metal aqueous solution and the aqueous NaOH solution were continuously added to the reactor at 0.83 L/hr and 0.29 L/hr, respectively, to perform a co-precipitation reaction such that the pH in the reactor reached about 11.0 within 2 hours of reaction time, and the co-precipitation reaction was then continued for 48 hours at a pH of about 11.0. After completion of the co-precipitation reaction, while maintaining a nitrogen atmosphere, as an inert atmosphere, in the reactor, 87.8 ml of an aqueous NH₄OH solution with a concentration of 9 wt% was added and stirred at a speed of 150 rpm for 1 hour to perform aging.

Thereafter, precursor particles thus formed were separated, washed, and then dried at 120°C for 12 hours to prepare a positive electrode active material precursor.

### Example 2

A positive electrode active material precursor was prepared in the same manner as in Example 1 except that 44.4 ml of the aqueous NH₄OH solution with a concentration of 9 wt% was added after the completion of the co-precipitation reaction to perform aging in Example 1.

### Example 3

A positive electrode active material precursor was prepared in the same manner as in Example 1 except that 266.3 ml of the aqueous NH₄OH solution with a concentration of 9 wt% was added after the completion of the co-precipitation reaction to perform aging in Example 1.

### Comparative Example 1

NiSO₄ and MnSO₄ were mixed in deionized water in amounts such that a molar ratio of Ni:Mn was 35:65 to prepare a transition metal aqueous solution with a concentration of 2.4 M.

2.6 L of deionized water was added into a 10 L continuous stirred tank reactor, and the reactor was purged with nitrogen gas at 2 L/min to remove dissolved oxygen in the water and create a non-oxidizing atmosphere in the reactor. Thereafter, while continuously flowing the nitrogen gas at 2 L/min, 3.87 ml of an aqueous NaOH solution with a concentration of 25 wt% and 88.8 ml of an aqueous NH₄OH solution with a concentration of 9 wt% were added and stirred at a speed of 150 rpm at 50°C to adjust a pH in the reactor to be about 12.0.

Thereafter, while stirring at 1,000 rpm, the transition metal aqueous solution and the aqueous NaOH solution were continuously added to the reactor at 0.83 L/hr and 0.29 L/hr, respectively, to perform a co-precipitation reaction such that the pH in the reactor reached about 11.0 within 2 hours of reaction time, and the co-precipitation reaction was then continued for 48 hours at a pH of about 11.0. After completion of the co-precipitation reaction, precursor particles thus formed were separated, washed, and then dried at 120°C for 12 hours to prepare a positive electrode active material precursor.

### Comparative Example 2

A positive electrode active material precursor was prepared in the same manner as in Example 1 except that 22.2 ml of the aqueous NH₄OH solution with a concentration of 9 wt% was added after the completion of the co-precipitation reaction to perform aging in Example 1.

### Comparative Example 3

A positive electrode active material precursor was prepared in the same manner as in Example 1 except that 355.0 ml of the aqueous NH₄OH solution with a concentration of 9 wt% was added after the completion of the co-precipitation reaction to perform aging in Example 1.

### Experimental Example 1

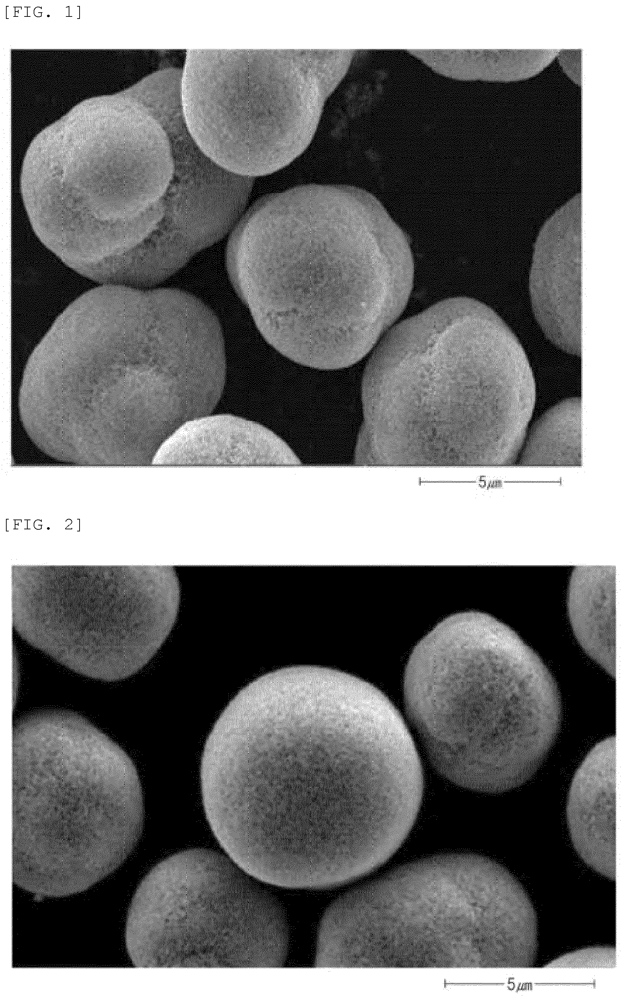

Formation or non-formation of a surface impurity (manganese oxide), a manganese oxide content, and a specific surface area of each positive electrode active material precursor prepared in the examples and the comparative examples were comparatively analyzed, and the results thereof are presented in Table 1 and FIGS. 1 to 6.

### (1) Formation or Non-formation of Surface Impurity

Formation or non-formation of the surface impurity (manganese oxide, Mn₃O₄) was confirmed through scanning electron microscope (SEM) analysis, and the SEM analysis was measured at a magnification of 10K using an SEM (QUANTA FEG 250, Thermo Fisher Scientific, Inc.).

### (2) Manganese Oxide Content (wt%)

A manganese oxide content in the precursor was confirmed through XRD analysis, and an XRD spectrum was measured and obtained with CuKα radiation at a voltage of 40 kV, a current of 40 mA, a 2θ (Bragg angle) = 15° to 95°, and a scan speed = 0.02°/0.20 sec using a Brucker D8 ADVANCE powder X-ray diffractometer (Bruker Corporation) and the content was calculated by quantitative analysis of an intensity of a manganese oxide crystal peak.

### (3) Specific Surface Area (m²/g)

A specific surface area was measured by a Brunauer-Emmett-Teller (BET) method, and was calculated from a nitrogen gas adsorption amount at a liquid nitrogen temperature (77K) using Tristar II (Micromeritics Instrument Corporation).

**[Table 1]**

| Category | Manganese oxide content (wt%) | Specific Surface Area (m²/g) |
|---|---|---|
| Example 1 | 0.01 | 42.9 |
| Example 2 | 0.20 | 41.9 |
| Example 3 | 0.04 | 32.8 |
| Comparative Example 1 | 2.44 | 41.3 |
| Comparative Example 2 | 1.87 | 43.2 |
| Comparative Example 3 | 0.06 | 26.8 |

As illustrated in Table 1, it was confirmed that the positive electrode active material precursors of Examples 1 to 3 had a manganese oxide content of 0.3 wt% or less and satisfied a specific surface area of 30 m²/g to 45 m²/g at the same time.

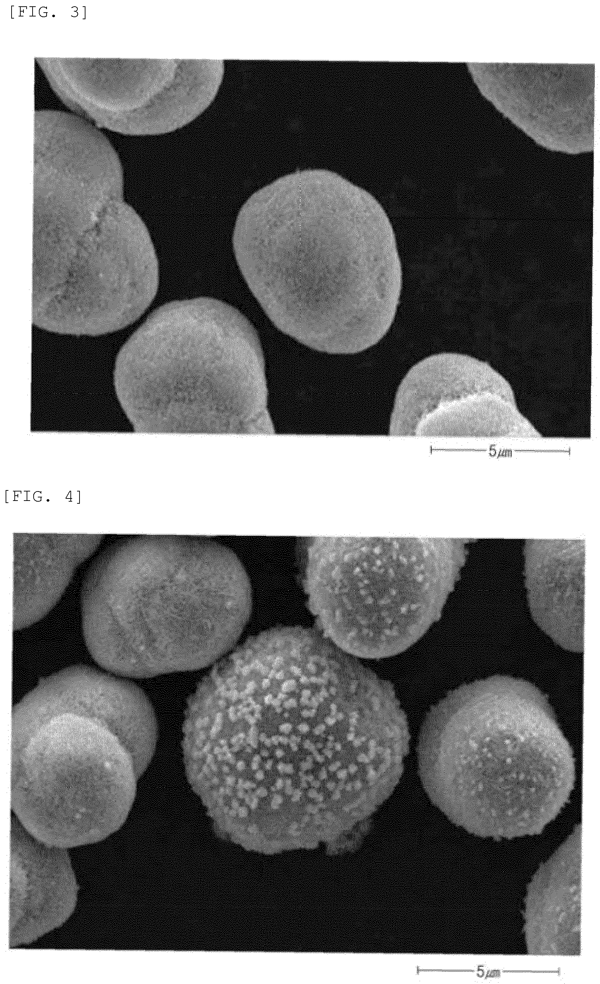

Also, through comparison of FIGS. 1 to 3 with FIG. 4, it may be clearly confirmed that there were no impurities on surfaces of the positive electrode active material precursors of Examples 1 to 3. Specifically, FIG. 4 is the results of the SEM analysis of the positive electrode active material precursor of Comparative Example 1 which was prepared under the same conditions as Example 1 except that the aging was not performed after the completion of the co-precipitation reaction, wherein impurities were present while surrounding the entire surface of the precursor, but it may be confirmed in FIGS. 1 to 3, which are the results of the SEM analysis of the positive electrode active material precursors of Examples 1 to 3, that there were no impurities on the surfaces of the precursors.

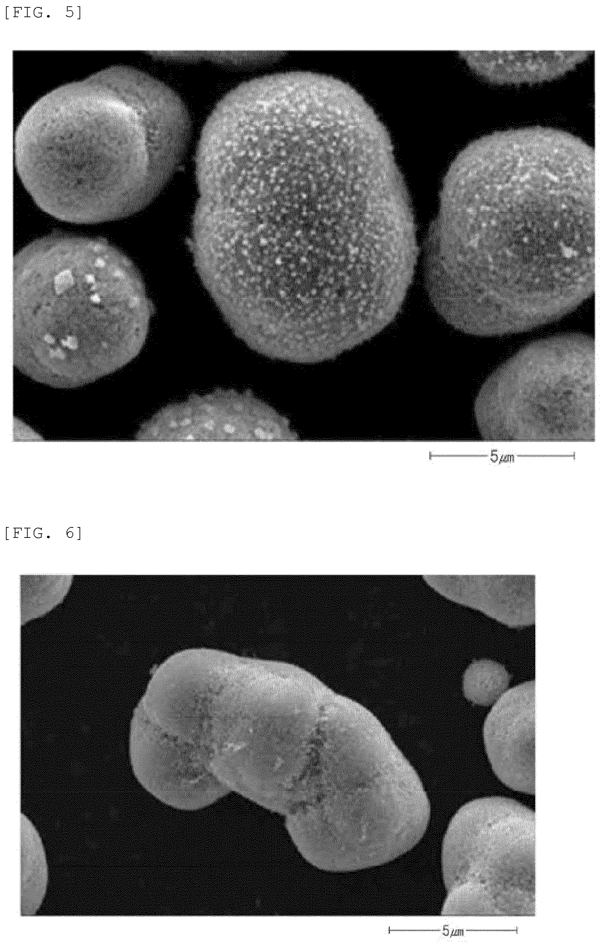

Furthermore, it was confirmed that impurities were present, while surrounding the entire surface of the precursor as in Comparative Example 1, on the surface of the positive electrode active material precursor of Comparative Example 2 which was subjected to the aging after the completion of the co-precipitation reaction, but was prepared by adding NH₄OH, an ammonium cationic complexing agent, such that a weight ratio of the NH₄OH added before the co-precipitation reaction to the NH₄OH was 1:0.25 (see FIG. 5).

With respect to the positive electrode active material precursor of Comparative Example 3 which was subjected to the aging after the completion of the co-precipitation reaction, but was prepared by adding NH₄OH, an ammonium cationic complexing agent, such that a weight ratio of the NH₄OH added before the co-precipitation reaction to the NH₄OH was 1:4, it was confirmed that although there were no impurities on the surface of the precursor, irregular oversized particles were formed by an aggregation phenomenon between unreacted materials due to the use of an excessive amount of the ammonium cationic complexing agent (see FIG. 6). Also, with respect to the aggregated precursor such as Comparative Example 3, there is a problem of low conductivity when used in the positive electrode active material, it may be predicted that problems with poor capacity and efficiency of the battery are caused by this, and these problems may also be clearly confirmed through the results of Table 1 to be described later.

### Experimental Example 2

A positive electrode active material was prepared by using each of the positive electrode active material precursors prepared in the examples and the comparative examples, a battery was prepared by using the same, and battery performance was then evaluated.

### (1) Preparation of Positive Electrode Active Material

Each positive electrode active material precursor and LiOH were mixed such that a molar ratio of the precursor to Li in the LiOH was 1:1.35, and the mixture was then sintered at 900°C for 15 hours in an air atmosphere to prepare each positive electrode active material.

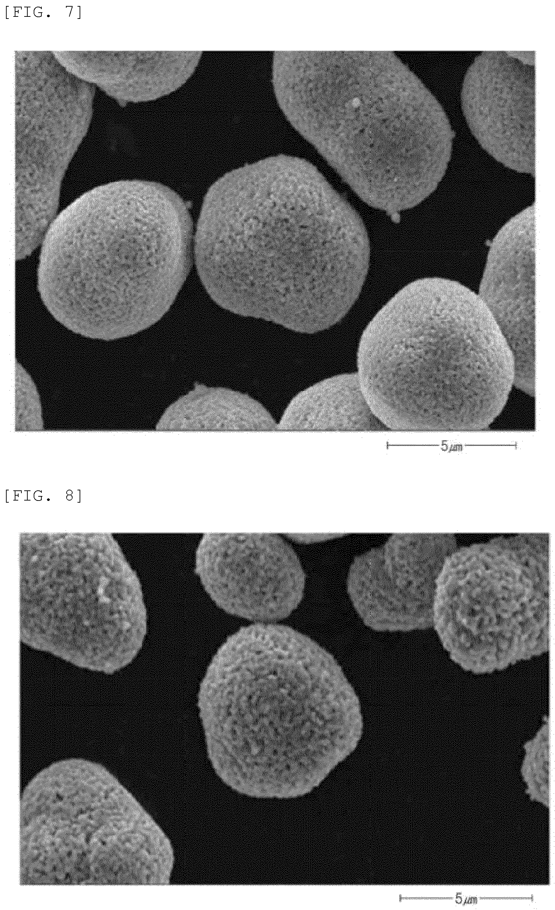

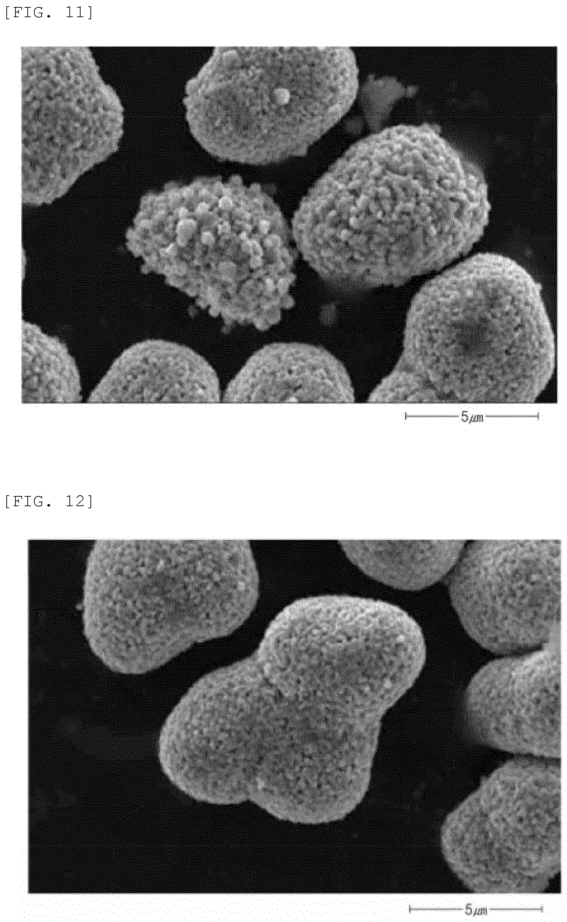

The prepared positive electrode active materials were measured at a magnification of 10K using an SEM (QUANTA FEG 250, Thermo Fisher Scientific, Inc.) to confirm whether or not surface impurities remained, and the results thereof are presented in FIGS. 7 to 12.

### (2) Preparation of Positive Electrode

Each positive electrode active material prepared above, a carbon black conductive agent, and a PVdF binder were mixed in an N-methylpyrrolidone solvent in a weight ratio of 92.5:3.0:4.5 to prepare a positive electrode material mixture (viscosity: 5,000 mPa·s), and one surface of an aluminum current collector was coated with the positive electrode material mixture, dried at 130°C, and then rolled to prepare each positive electrode.

### (3) Preparation of Battery

Lithium metal was used as a negative electrode.

An electrode assembly was prepared by disposing a porous polyethylene separator between the above-prepared positive electrode and negative electrode, the electrode assembly was disposed in a case, and an electrolyte solution was then injected into the case to prepare a lithium secondary battery. In this case, the electrolyte solution was prepared by dissolving 1.0 M lithium hexafluorophosphate (LiPF₆) in an organic solvent which was composed of ethylene carbonate/ethyl methyl carbonate (mixing volume ratio of EC/EMC = 3/7).

Each lithium secondary battery half-cell thus prepared was charged at 0.1 C and 0.33 C to 4.4 V in a constant current-constant voltage (CC-CV) mode at 25°C, and discharged at constant currents of 0.1 C and 0.33 C to 2.5 V to measure initial charge and discharge capacities and efficiency. Also, a ratio (0.33C/0.1C, %) of capacity when discharging at 0.33 C to capacity when charging at 0.1 C and discharging at 0.1 C and capacity retention after repeating charging at 0.1 C and discharging at 0.1 C 30 times were confirmed. The results thereof are presented in Table 2 below.

**[Table 2]**

| Category | Initial charge capacity (mAh/g) | | Initial discharge capacity (mAh/g) | | Initial efficiency (%) | | 0.33C/0.1C , % | Capacity retent ion (%) |
|---|---|---|---|---|---|---|---|---|
| | 0.1C | 0.33C | 0.1C | 0.33C | 0.1C | 0.33C | | |
| Example 1 | 232.8 | 214.3 | 215.4 | 198.6 | 92.5 | 92.7 | 92.2 | 98.4 |
| Example 2 | 231.2 | 214.4 | 215.0 | 198.1 | 93.0 | 92.4 | 92.1 | 98.5 |
| Example 3 | 231.5 | 212.9 | 213.5 | 196.2 | 92.2 | 92.2 | 91.9 | 98.6 |
| Comparative Example 1 | 224.2 | 207.2 | 208.2 | 186.6 | 92.9 | 90.1 | 89.6 | 97.7 |
| Comparative Example 2 | 227.0 | 209.0 | 209.8 | 188.6 | 92.4 | 90.3 | 89.9 | 97.6 |
| Comparative Example 3 | 221.4 | 205.7 | 206.7 | 184.6 | 93.4 | 89.9 | 89.3 | 97.7 |

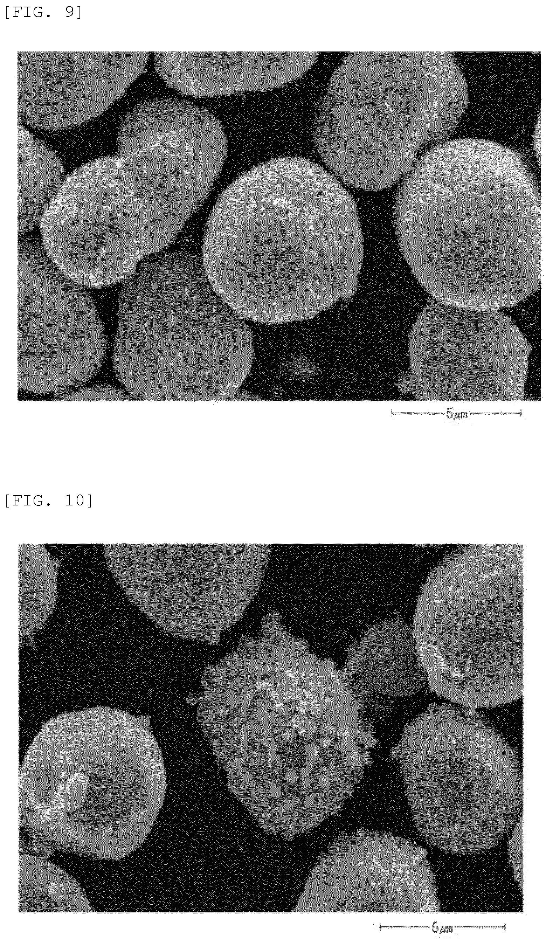

According to FIGS. 7 to 9, it was confirmed that there were no impurities on surfaces of the positive electrode active materials prepared by using the positive electrode active material precursors of Examples 1 to 3. In contrast, according to FIGS. 10 to 12, it was confirmed that a significant amount of impurities was present on surfaces of the positive electrode active materials prepared by using the positive electrode active material precursors of Comparative Example 1 and Comparative Example 2, and it was confirmed that irregular oversized particles were formed in the positive electrode active material prepared by using the positive electrode active material precursor of Comparative Example 3 due to an aggregation phenomenon. Also, according to Table 2, it was confirmed that the positive electrode active materials of Examples 1 to 3 exhibited increased capacity retentions while their initial charge capacities showed an effective increase rate of about 3% to about 5% in comparison to those of Comparative Examples 1 to 3.

## Claims

1. A method of preparing a positive electrode active material precursor, the method comprising steps of:
performing a co-precipitation reaction on a transition metal solution containing nickel (Ni) and manganese (Mn) in the presence of a basic solution and an ammonium cationic complexing agent in a nitrogen atmosphere (S1); and
additionally adding an ammonium cationic complexing agent and aging while maintaining the nitrogen atmosphere, after completion of the co-precipitation reaction (S2),
wherein the ammonium cationic complexing agent in step (S2) is added such that a volume ratio of the ammonium cationic complexing agent in step (S1) to the ammonium cationic complexing agent in step (S2) is in a range of 1:0.5 to 1:3.5.

2. The method of claim 1, wherein the co-precipitation reaction of step (S1) is performed by steps of:
adding a basic solution and an ammonium cationic complexing agent to a reactor with a nitrogen atmosphere and mixing to create an atmosphere with a pH of 12.0 or less (S1-1); and
adding a transition metal solution containing Ni and Mn and a basic solution to the reactor and performing a co-precipitation reaction at a pH of 11.0 or less (S1-2).

3. The method of claim 2, wherein the pH in step (S1-1) is in a range of 11.5 to 12.0, and the pH in step (S1-2) is in a range of 10.5 to 11.0.

4. The method of claim 1, wherein the ammonium cationic complexing agent of step (S1) is used in an amount of 0.006 mole to 0.012 mole based on 1 mole of transition metal in the transition metal solution.

5. The method of claim 1, wherein the transition metal solution further comprises at least one selected from zirconium (Zr), aluminum (Al), copper (Cu), rhenium (Re), vanadium (V), chromium (Cr), iron (Fe), gallium (Ga), silicon (Si), boron (B), ruthenium (Ru), titanium (Ti), niobium (Nb), molybdenum (Mo), magnesium (Mg), and platinum (Pt).

6. The method of claim 1, wherein the transition metal solution comprises Mn in an amount of greater than 50 mol%.

7. A positive electrode active material precursor comprising a transition metal hydroxide represented by Formula 1; and optionally a manganese oxide (Mn₃O₄), and having a specific surface area of 30 m²/g to 45 m²/g,
wherein, in a case in which the positive electrode active material precursor comprises the manganese oxide, an amount of the manganese oxide is 0.3 wt% or less:
[Formula 1] [NiₐMn_{b}M_{c}](OH)₂
wherein, in Formula 1,
M is one selected from zirconium (Zr), aluminum (Al), copper (Cu), rhenium (Re), vanadium (V), chromium (Cr), iron (Fe), gallium (Ga), silicon (Si), boron (B), ruthenium (Ru), titanium (Ti), niobium (Nb), molybdenum (Mo), magnesium (Mg), and platinum (Pt), and
0.1≤a≤0.4, 0.5<b≤0.80, 0≤c≤0.1, and a+b+c=1.

8. A method of preparing a positive electrode active material, the method comprising steps of:
mixing the positive electrode active material precursor of claim 7 and a lithium raw material; and
sintering the mixture.

9. The method of claim 8, wherein the positive electrode active material precursor and the lithium raw material are mixed such that a molar ratio of the positive electrode active material precursor to a lithium element in the lithium raw material is in a range of 1:1.2 to 1:1.6.
